(19) Europäisches Patentamt / European Patent Office / Office européen des brevets

(11) **EP 4 370 875 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **22736292.8**

(22) Anmeldetag: **01.07.2022**

(51) Internationale Patentklassifikation (IPC):
**G01D 5/244** *(2006.01)*       **G01D 5/245** *(2006.01)*
**G01D 5/347** *(2006.01)*

(52) Gemeinsame Patentklassifikation (CPC):
**G01D 5/2455; G01D 5/24461; G01D 5/34792**

(86) Internationale Anmeldenummer:
**PCT/EP2022/068352**

(87) Internationale Veröffentlichungsnummer:
**WO 2023/285172 (19.01.2023 Gazette 2023/03)**

(54) **ENCODERSYSTEM SOWIE VERFAHREN ZUR BESTIMMUNG DER LESEKOPFPOSITION IN EINEM ENCODERSYSTEM**

POSITION ENCODER SYSTEM AND METHOD OF DETERMINING THE READ HEAD POSITION IN A POSITION ENCODER SYSTEM

SYSTÈME DE CODAGE DE POSITION ET PROCÉDÉ DE DÉTERMINATION DE LA POSITION DE LA TÊTE DE LECTURE DANS UN SYSTÈME DE CODAGE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2021 DE 102021118091**

(43) Veröffentlichungstag der Anmeldung:
**22.05.2024 Patentblatt 2024/21**

(73) Patentinhaber: **Neura Robotics GmbH**
**72555 Metzingen (DE)**

(72) Erfinder:
• **SIRAKY, Josef**
**78166 Donaueschingen (DE)**
• **REGER, David**
**72555 Metzingen (DE)**
• **BROCKMANN, Jannick**
**22083 Hamburg (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
EP-A2- 1 770 374        WO-A1-2014/030177
WO-A1-2019/119162       WO-A1-2019/192196
DE-A1- 102013 220 749

## Beschreibung

Die Erfindung betrifft ein Encodersystem sowie ein Verfahren zur Bestimmung der Lesekopfposition in einem Encodersystem.

Absolute Positions- oder Drehwinkelmesssysteme, sogenannten Encodersysteme, sind in der Automatisierung seit Jahrzehnten unverzichtbare Komponenten. Sie weisen üblicherweise einen Lesekopf mit einem Positionssensor sowie eine Maßverkörperung auf. Dabei sind der Positionssensor und die Maßverkörperung so an relativ zueinander beweglichen Maschinenelementen angebracht, dass der Positionssensor die Maßverkörperung abtasten und eine Sensorposition erfassen kann. Die so erfasste Sensorposition entspricht üblicherweise der Lesekopfposition. Gegenüber sogenannten inkrementalen Messsystemen, die nach dem Einschalten der Versorgungsspannung zur Positionsbestimmung zunächst auf eine einmalige Referenzmarke fahren müssen, haben absolute Systeme den Vorteil, dass nach dem Einschalten jede Position auf der abzutastenden Maßverkörperung als einmalige absolute Position erfasst werden kann.

In der Praxis tritt des Öfteren der Fall auf, dass durch Störeinflüsse, wie beispielsweise Verschmutzungen des Positionssensors oder der Maßverkörperung oder Magnetfeldeinflüsse, die erfasste Sensorposition falsch ist. Erst nach einer dann erfolgten Positionsänderungen kann erkannt werden, dass die Anfangsposition falsch war, da die Monotonie, die jedem absoluten Messsystem zugrunde liegt, gestört ist (nach erfasster Sensorposition n folgt nicht n+1 oder n-1).

Eine weitere Problemstellung ist dadurch gegeben, dass die insbesondere besonders lange Maßverkörperungen nur sehr schwierig montierbar und handhabbar sind, insbesondere wenn bei optischen Systemen gläserne Maßverkörperungen zum Einsatz kommen. Beispielsweise bringt eine einstückig ausgebildete, fünf Meter lange gläserne Maßverkörperung einen erheblichen Transport- und Montageaufwand mit sich.

Um die Bestimmung der Lesekopfposition nach dem Einschalten der Versorgungsspannung sicherer zu machen, ist es bekannt, zwei Positionssensoren einzusetzen, die die Maßverkörperung an derselben Stelle abtasten, und deren Sensorpositionen zu vergleichen. Liegt an der entsprechenden Position ein Störgröße z.B. durch eine Verschmutzung des Maßstabs vor, erfassen beide Positionssensoren eine fehlerhafte Position. Eine zuverlässige Bestimmung der aktuellen Lesekopfposition ist damit nicht möglich.

Maßverkörperungen in kurzen, handlichen Segmenten aneinanderzureihen ist als Prinzip in der EP 2 288 876 B1 gezeigt. Damit kann die Montierbarkeit und Handhabbarkeit verbessert werden. Insbesondere durch den Versatz, der beim Aneinanderreihen der Segmente bei der Montage entsteht, geht dieses Prinzip mit einem Verlust an Messgenauigkeit einher. So kann beispielsweise aufgrund zwischen den Segmenten auftretenden Lücken die Gesamtlänge einer Maßverkörperung im Vergleich zu einer entsprechenden einstückigen Maßverkörperung größer ausfallen.

Als weiterer Stand der Technik werden die WO 2019/119162 A1, die EP 1 770 374 A2, die WO 2019/192196 A1, die DE 10 2013 220749 A1 und die WO 2014/030177 A1 genannt.

Darüber hinaus leidet die Messgenauigkeit eines Encodersystems regelmäßig darunter, dass sich die Länge der Maßverkörperung insbesondere infolge der Temperaturabhängigkeit verändert.

Die geschilderten Szenarien führen dazu, dass die erfasste Lesekopfposition von der tatsächlichen Lesekopfposition abweicht.

Eine Aufgabe der Erfindung besteht daher darin, ein Encodersystem bereitzustellen, mit dem die Lesekopfposition unabhängig von Störeinflüssen einfach, zuverlässig und präzise bestimmbar ist, und das darüber hinaus einfach und günstig herstellbar ist. Eine weitere Aufgabe der Erfindung besteht darin, ein Verfahren bereitzustellen, mit dem die Lesekopfposition eines Encodersystems trotz Störeinflüssen eindeutig, zuverlässig und präzise bestimmbar ist.

Die Aufgabe wird erfindungsgemäß gelöst durch ein Encodersystem mit den Merkmalen des Patentanspruchs 1 und ein Verfahren zur Bestimmung der Lesekopfposition in einem Encodersystem mit den Merkmalen des Patentanspruchs 13.

Vorteilhafte Ausgestaltungen und Weiterbildungen der Erfindung sind in den abhängigen Ansprüchen angegeben.

Ein erfindungsgemäßes Encodersystem weist folgende Merkmale auf: einen Lesekopf mit mindestens einem ersten Positionssensor und mindestens einem zweiten Positionssensor, wobei die Positionssensoren in einer Leserichtung mit einem festen Abstand zueinander angeordnet sind, sowie eine Maßverkörperung mit einer Längsrichtung und einer Querrichtung, wobei die Maßverkörperung in Längsrichtung eine erste Codestrecke mit einer ersten absolut codierten Codespur aufweist, und wobei der Lesekopf und die Maßverkörperung derart zueinander angeordnet sind, dass die Leserichtung der Längsrichtung entspricht, dass der Lesekopf und die Maßverkörperung in Leserichtung relativ zueinander bewegbar sind, und dass von dem mindestens einen ersten Positionssensor jeweils eine erste Sensorposition auf der Maßverkörperung erfassbar ist und gleichzeitig von dem mindestens einen zweiten Positionssensor jeweils eine zweite Sensorposition auf der Maßverkörperung erfassbar ist.

Die Leserichtung wird vorzugsweise durch die Richtung gebildet, in der der Lesekopf bei bestimmungsgemäßem Einsatz in einem Encodersystem relativ zu einer Maßverkörperung bewegt wird. Durch ihre Eignung, absolut codierte Codespuren abzutasten, sind die Positionssensoren vorzugsweise derart ausgebildet, dass sie eine auf einer absolut codierten Codespur angeordnete Positionsangabe erfassen können. Ein Lesekopf, der eine Mehrzahl an ersten Positionssensoren und/oder eine Mehrzahl an zweiten Positionssensoren aufweist, ist vorzugsweise derart ausgebildet, dass alle Positionssensoren in Leserichtung beabstandet zueinander angeordnet sind.

Bevorzugt sind die Positionssensoren senkrecht zur Leserichtung ausgerichtet. Durch die beabstandete Anordnung des mindestens einen ersten Positionssensors und des mindestens einen zweiten Positionssensors kann der Lesekopf vorzugsweise mindestens zwei unterschiedliche Sensorpositionen erfassen. Aus den erfassten Sensorpositionen kann eine Lesekopfposition bestimmt werden. Die Positionssensoren können derart ausgebildet sein, dass sie die jeweilige Sensorposition in Form eines digitalen Werts erfassen können. Die Auflösung der bestimmten Lesekopfposition kann sich mit der Anzahl der Positionssensoren erhöhen.

Dadurch, dass die Positionssensoren in einem festen Abstand zueinander angeordnet sind, kann, auch wenn einer der Positionssensoren eine nicht plausible oder nicht aussagekräftige Sensorposition erfasst, durch die von dem mindestens einen anderen Positionssensor erfasste Sensorposition auf die korrekte Sensorposition des einen Positionssensors und die Lesekopfposition geschlossen werden. Eine nicht plausible oder nicht aussagekräftige Sensorposition kann beispielsweise aufgrund einer Verschmutzung erfasst werden.

Als aussagekräftig wird die erfasste Sensorposition vorzugsweise dann bezeichnet, wenn sie durch einen Wert gebildet wird, der tatsächlich auf der entsprechenden Codespur vorkommt. Als plausibel wird die von einem bestimmten Positionssensor erfasste Sensorposition vorzugsweise dann bezeichnet, wenn, insbesondere aufgrund der bekannten festen Abstände der Positionssensoren und den von den übrigen Positionssensoren erfassten Sensorpositionen, davon ausgegangen werden kann, dass die von dem einen Positionssensor erfasste Sensorposition mit dessen tatsächlicher Sensorposition, zumindest in hinreichend genauer Näherung, übereinstimmt.

Die Maßverkörperung ist vorzugsweise als Glasmaßstab ausgebildet. Dadurch dass die mindestens eine erste Sensorposition und die mindestens eine zweite Sensorposition gleichzeitig auf der Maßverkörperung erfassbar sind, kann die entsprechende Lesekopfposition aus zumindest zwei unterschiedlichen Sensorpositionen bestimmt werden.

Besonders bevorzugt weist das Encodersystem zwei erste Positionssensoren und zwei zweite Positionssensoren auf. Damit kann der Lesekopf insgesamt vier Positionssensoren aufweisen. Dadurch kann die Lesekopfposition insbesondere im Vergleich zu einer Ausführungsform des Lesekopfs mit zwei Positionssensoren besonders zuverlässig angegeben werden. Erfassen in einer Ausführungsform mit zwei Positionssensoren beide Positionssensoren eine aussagekräftige Sensorposition, die erfassten Sensorpositionen weichen von dem festen Abstand der Positionssensoren übermäßig ab, kann nicht festgestellt werden, welche der beiden erfassten Positionen plausibel ist. Damit kann in einer solchen Situation keine zuverlässige Lesekopfposition bestimmt werden. Mit steigender Anzahl an Positionssensoren ist üblicherweise auch eine höhere Redundanz und damit eine höhere Sicherheit bei der Bestimmung der Lesekopfposition gegeben. Erfasst in einer Ausführungsform mit zwei ersten Positionssensoren und zwei zweiten Positionssensoren einer der Sensoren eine falsche aber aussagekräftige Sensorposition, kann aufgrund der der von den übrigen drei Positionssensoren erfassten Sensorpositionen einfach festgestellt werden, welche der erfassten Sensorpositionen nicht plausibel ist. Durch die Anordnung von vier Positionssensoren an dem Lesekopf kann die falsch erfasste Sensorposition selbst dann ermittelt werden, wenn ein weiterer Positionssensor eine nicht aussagekräftige Sensorposition erfasst.

Vorzugsweise sind die beiden ersten Positionssensoren und die beiden zweiten Positionssensoren im Wechsel an dem Lesekopf angeordnet, sodass in Leserichtung auf den ersten ersten Positionssensor der erste zweite Positionssensor, der zweite erste Positionssensor und der zweite zweite Positionssensor in dieser Reihenfolge folgen.

In einer bevorzugten Ausführungsform der Erfindung sind die Positionssensoren als optische Positionssensoren ausgebildet. Mit optischen Positionssensoren können die Sensorpositionen sehr genau und sehr hoch aufgelöst erfasst werden. Besonders bevorzugt sind die Positionssensoren als optisch reflektive Positionssensoren ausgebildet. Die Positionssensoren können auch als induktive, magnetische oder kapazitive Positionssensoren ausgebildet sein.

Vorzugsweise ist jeder der Positionssensoren zur gleichzeitigen Abtastung einer absolut codierten Codespur und einer inkrementell codierten Codespur geeignet. Damit ist jeder der Positionssensoren vorzugsweise derart ausgebildet, dass er neben einer auf einer absolut codierten Codespur angeordneten Positionsangabe auch eine auf einer inkrementell codierten Codespur angeordnete Positionsangabe erfassen kann. Dadurch, dass die Abtastung der absolut codierten Codespur und der inkrementell codierten Codespur gleichzeitig erfolgen kann, kann die jeweilige Sensorposition mit einer höheren Genauigkeit erfasst werden.

Die Positionssensoren können auf einem einstückigen Sensorträger angeordnet sein, dessen Wärmeausdehnungskoeffizient betragsmäßig kleiner oder gleich 2 ppm/K ist. Dadurch kann erreicht werden, dass eine Temperaturänderung auf den festen Abstand der Positionssensoren untereinander einen vernachlässigbaren Einfluss hat. Insbesondere wenn eine Temperaturänderung im Hinblick auf die abzutastenden Maßverkörperung gleichzeitig eine nicht zu vernachlässigende Längenänderung hervorruft, kann damit die Wärmeausdehnung der Maßverkörperung aus den von den Positionssensoren gleichzeitig erfassten Sensorpositionen bestimmt und gegebenenfalls kompensiert werden. Besonders bevorzugt ist der Sensorträger aus Quarzglas mit einem Wärmeausdehnungskoeffizient von 1 ppm/K gefertigt.

Erfindungsgemäß weist die erste Codestrecke eine erste inkrementell codierte Codespur auf. Damit weist die erste Codestrecke die erste absolut codierte Codespur und die erste inkrementell codierte Codespur auf. Vorzugsweise ist die erste inkrementell codierte Codespur in Querrichtung neben der ersten absolut codierten Codespur und in Längsrichtung parallel zu der ersten absolut codierten Codespur angeordnet. Die erste absolut codierte Codespur und die erste inkrementell codierte Codespur können so nebeneinander angeordnet sein, dass die Positionssensoren, die zur gleichzeitigen Abtastung einer absolut codierten Codespur und einer inkrementell codierten Codespur geeignet sind, die erste absolut codierte Codespur und die erste inkrementell codierte Codespur gleichzeitig abtasten können.

Der erste inkrementell codierte Codespur ist vorzugsweise so ausgebildet, dass sie einen Inkrementalcode aufweist, der sich zyklisch wiederholt und dessen Perioden über die absolut codierte Codespur absolut zugeordnet werden können. Vorzugsweise weist die inkrementell codierte Codespur eine feinere Einteilung und damit eine höhere Auflösung als die absolut codierte Codespur auf. Durch die gleichzeitige Abtastung der absolut codierten Codespur und der inkrementell codierten Codespur können somit hochaufgelöste absolute Sensorpositionen erfasst werden.

Die Maßverkörperung weist erfindungsgemäß eine zweite Codestrecke auf, wobei der Lesekopf und die Maßverkörperung derart zueinander angeordnet sind, dass von dem mindestens einen ersten Positionssensor die jeweilige erste Sensorposition auf der ersten Codestrecke erfassbar ist und gleichzeitig von dem mindestens einen zweiten Positionssensor die jeweilige zweite Sensorposition auf der zweiten Codestrecke erfassbar ist. Dadurch kann eine höhere Redundanz und damit eine größere Zuverlässigkeit des Encodersystems erreicht werden.

Die zweite Codestrecke weist erfindungsgemäß eine zweite absolut codierte Codespur und eine zweite inkrementell codierte Codespur auf. Dabei können die erste Codestrecke und die zweite Codestrecke derart angeordnet sein, dass die erste inkrementell codierte Codespur und die zweite inkrementell codierte Codespur einander zugewandt sind. In einer Ausführungsform der Erfindung kann die zweite inkrementell codierte Codespur durch die erste inkrementell codierte Codespur gebildet sein, sodass die Maßverkörperung zwei absolut codierte Codespuren und eine inkrementell codierte Codespur aufweist.

Vorzugsweise sind die erste Codestrecke und die zweite Codestrecke gegensinnig zueinander angeordnet. In Längsrichtung kann damit die erste Codestrecke eine aufsteigende Zählrichtung und die zweite Codestrecke eine absteigende Zählrichtung aufweisen oder umgekehrt. Ausgehend von der mindestens einen ersten erfassten Sensorposition und der mindestens einen zweiten erfassten Sensorposition kann die Lesekopfposition jeweils nach unterschiedlichen Berechnungsvorschriften bestimmt werden. Dadurch kann eine zusätzliche Sicherheit bei der Bestimmung der Lesekopfposition erreicht werden.

In einer Ausführungsform der Erfindung weist die Maßverkörperung mindestens ein Maßverkörperungssegment mit einem ersten Segmentende und einem zweiten Segementende aufweist. Dadurch kann die Maßverkörperung einfach montierbar und insbesondere in der Montage und im Transport einfach handhabbar sein. Bei der Montage werden vorzugsweise mehrere Maßverkörperungssegmente hintereinander angeordnet, um eine entsprechend große Gesamtlänge der Maßverkörperung zu erreichen. Bei der montierten Maßverkörperung kann zwischen zwei aufeinanderfolgenden Segmentenden ein Versatz in Form einer Lücke angeordnet sein. Dadurch kann die Montage vereinfacht werden.

Die Maßverkörperung kann linear oder bogenförmig und/oder kreisförmig ausgebildet sein. Insbesondere kann die Maßverkörperung flexibel ausgebildet sein. Bei einer kreisförmigen Ausbildung der Maßverkörperung kann die Maßverkörperung derart angeordnet sein, dass die Querrichtung und die Längsrichtung der Maßverkörperung senkrecht zum Radius eines gebildeten Kreises angeordnet sind. Die Positionssensoren des Lesekopfs sind damit vorzugsweise zumindest näherungsweise zum Kreismittelpunkt hin ausgerichtet. Auf diese Weise kann die Lesekopfposition auf dem Kreisumfang bestimmt werden. Aus der Lesekopfposition kann damit der entsprechende Drehwinkel bestimmt werden. Das Encodersystem kann damit zur Drehwinkelbestimmung insbesondere bei Anwendungen eingesetzt werden, bei denen Wellen mit großem Durchmesser vorliegen und gleichzeitig eine hohe Positionsgenauigkeit gefordert ist, so zum Beispiel bei Sternwarten.

Vorzugsweise weist das Encodersystem eine Auswerteeinheit zur Auswertung der Sensorpositionen auf, wobei die Auswerteeinheit dazu ausgebildet ist, aus den jeweils gleichzeitig erfassten Sensorpositionen eine Lesekopfposition zu bestimmen. Die Lesekopfposition kann insbesondere durch Mittelung der erfassten Sensorpositionen erfolgen. Dabei kann die Lesekopfposition im Verhältnis zu der Lage der Positionssensoren im Lesekopf beliebig definiert werden. Beispielsweise kann die Lesekopfposition mittig zwischen dem mindestens einen ersten Positionssensor und dem mindestens einen zweiten Positionssensor angeordnet sein. Durch die Mittelung der von einer Mehrzahl und beabstandet zueinander angeordneten Positionssensoren erfassten Sensorpositionen kann damit die Auflösung der daraus bestimmten Lesekopfposition erhöht werden.

Die Auswerteeinheit kann dazu ausgebildet sein, die Sensorpositionen auf Plausibilität und/oder Aussagekraft zu prüfen und nicht plausible und/oder nicht aussagekräftige Sensorpositionen nicht zur Bestimmung der Lesekopfposition zu verwenden. Dadurch kann die Lesekopfposition auch dann bestimmt werden, wenn eine oder mehrere der ermittelten Sensorpositionen unbrauchbar, also unplausibel oder nicht aussagekräftig sind.

Bevorzugt weist die Auswerteeinheit Speichermittel zur Speicherung von Sensorpositionen und/oder Lesekopfpositionen auf. Dadurch können insbesondere bestimmte Sensorpositionen und/oder Lesekopfpositionen abgespeichert und zu einem späteren Zeitpunkt verwendet werden. Insbesondere bei Maßverkörperungen, die Lücken zwischen zwei aufeinanderfolgenden Segmentenden aufweisen, können in einer Einlernfahrt die Lücken erfasst und abgespeichert werden. Erfasst im späteren Betrieb einer der Positionssensoren eine Lücke kann die von ihm erfasste Sensorposition beispielsweise als plausibel aber nicht aussagekräftig eingeordnet werden.

Insbesondere ein Encodersystem, das eine erste Codestrecke und eine zweite Codestrecke aufweist, kann mehrere Maßverkörperungen aufweisen, wobei in jeder Maßverkörperung die erste Codestrecke und die zweite Codestrecke unterschiedlich zueinander angeordnet sein können. Vorzugsweise sind die Maßverkörperungen in Längsrichtung hintereinander angeordnet. Damit kann eine Messstrecke, auf der eine Lesekopfposition bestimmbar ist, um die Anzahl der hintereinander angeordneten Maßverkörperungen verlängert werden. Durch die jeweils unterschiedliche Anordnung der ersten Codestrecke und der zweiten Codestrecke unterscheidet sich zwischen den einzelnen Maßverkörperungen die Differenz zwischen der von dem ersten Positionssensor und dem zweiten Positionssensor jeweils gleichzeitig erfassten Sensorpositionen. Damit kann vorzugsweise jede Position, die der Lesekopf auf der Messstrecke einnehmen kann, absolut und eindeutig bestimmt werden. Beispielsweise kann bei jeder Maßverkörperung die erste Codestecke zur zweiten Codestrecke im Vergleich zur vorherigen Maßverkörperung um einen Absolutwert verschoben werden. Die maximale Länge der Messstrecke wird vorzugsweise nur durch die Anzahl an Kombinationsmöglichkeiten der ersten Codestrecke mit der zweiten Codestrecke bestimmt.

Ein Verfahren zur Bestimmung der Lesekopfposition in einem Encodersystem nach einer der beschriebenen Ausführungsformen weist folgende Schritte auf:

- gleichzeitige Erfassung der jeweiligen ersten Sensorposition des mindestens einen ersten Positionssensors und der jeweiligen zweiten Sensorposition des mindestens einen zweiten Positionssensors,
- Überprüfung der Plausibilität und/oder Aussagekraft jeder Sensorposition durch Vergleich mit den jeweils anderen gleichzeitig ermittelten Sensorpositionen,
- Bestimmung der Lesekopfposition auf Basis der plausiblen und/oder aussagekräftigen Sensorpositionen.

Ausführungsbeispiele der Erfindung werden anhand der nachfolgenden Figuren erläutert. Es zeigt:

Figur 1     eine schematische Seitenansicht eines ersten Ausführungsbeispiels eines Encodersystems,

Figur 2     eine schematische Draufsicht eines zweiten Ausführungsbeispiels eines Encodersystems,

Figur 3     eine schematische Draufsicht eines dritten Ausführungsbeispiels eines Encodersystems,

Figur 4     eine schematische Draufsicht eines vierten Ausführungsbeispiels eines Encodersystems,

Figur 5     eine schematische Seitenansicht eines fünften Ausführungsbeispiels eines Encodersystems,

Figur 6     eine schematische Detailansicht des in Fig. 5 gezeigten Ausführungsbeispiels eines Encodersystems,

Figur 7     eine schematische Detailansicht eines sechsten Ausführungsbeispiels eines Encodersystems,

Figur 8     eine schematische Detailansicht eines siebten Ausführungsbeispiels eines Encodersystems,

Figur 9     eine schematische Darstellung eines ersten Ausführungsbeispiels einer Maßverkörperung,

Figur 10    eine schematische Darstellung eines zweiten Ausführungsbeispiels einer Maßverkörperung,

Figur 11    eine schematische Darstellung eines dritten Ausführungsbeispiels einer Maßverkörperung.

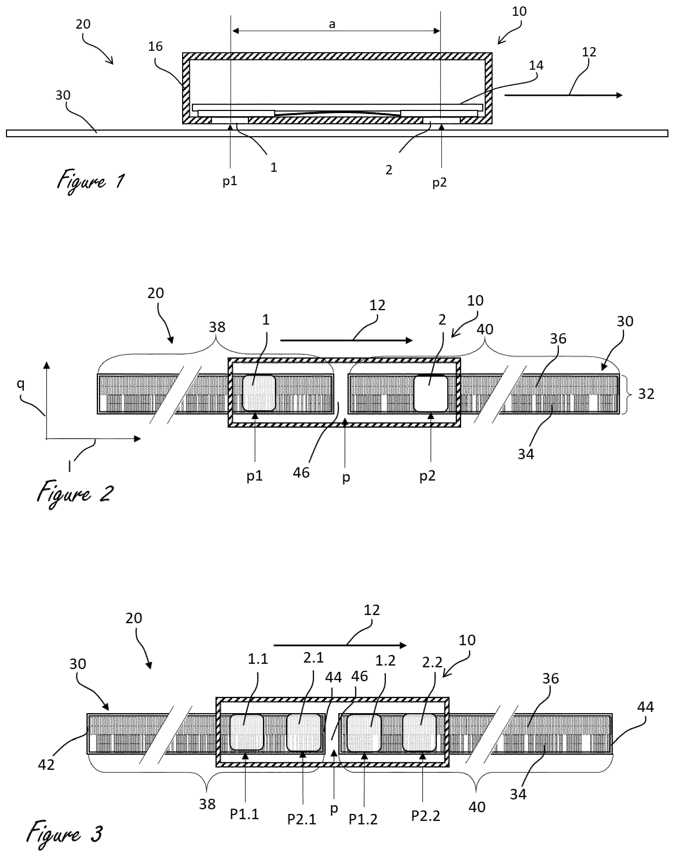

Die Figuren 1 bis 11 zeigen verschiedene Ansichten verschiedener Ausführungsbeispiele. Der Übersichtlichkeit halber werden nicht alle Bezugszeichen in jeder Figur verwendet. Für gleiche und funktionsgleiche Teile werden die gleichen Bezugszeichen verwendet.

Fig. 1 zeigt eine schematische Seitenansicht eines ersten Ausführungsbeispiels eines Encodersystems 20 mit einem Lesekopf 10 und einer Maßverkörperung 30. Der Lesekopf 10 weist einen ersten Positionssensor 1 und einem zweiten Positionssensor 2 auf. Die Positionssensoren 1, 2 sind zur Abtastung einer absolut codierten Codespur 34 geeignet und in einer Leserichtung 12 mit einem festen Abstand a zueinander angeordnet. Die Positionssensoren 1, 2 können auf einem einstückigen Sensorträger 14 angeordnet sein. Bevorzugt ist der Wärmeausdehnungskoeffizient des Sensortägers 14 betragsmäßig kleiner oder gleich 2 ppm/K. Besonders bevorzugt ist der Sensorträger 14 aus Quarzglas mit einem Wärmeausdehnungskoeffizient von ca. 1 ppm/K gefertigt. Der Lesekopf 10 kann ein Lesekopfgehäuse 16 aufweisen, in dem die Positionssensoren 1, 2 angeordnet sind. Die Positionssensoren 1, 2 können als optische Positionssensoren ausgebildet sein.

Wie in Figur 2 gezeigt ist, weist die Maßverkörperung 30 eine Längsrichtung l und eine Querrichtung q auf. In Längsrichtung l weist die Maßverkörperung 30 eine erste Codestrecke 32 mit der ersten absolut codierten Codespur 34 auf. Darüber hinaus weist die erste Codestrecke 32 eine erste inkrementell codierte Codespur 36 auf. Der Lesekopf 10 und die Maßverkörperung 30 sind derart zueinander angeordnet, dass die Leserichtung 12 der Längsrichtung l entspricht, und dass der Lesekopf 10 und die Maßverkörperung 30 in Leserichtung l relativ zueinander bewegbar sind. Außerdem sind der Lesekopf 10 und die Maßverkörperung 30 derart zueinander angeordnet, dass von dem ersten Positionssensor 1 eine erste Sensorposition p1 auf der Maßverkörperung 30 erfassbar ist und gleichzeitig von dem zweiten Positionssensor 2 eine zweite Sensorposition p2 auf der Maßverkörperung 30 erfassbar ist. Die Positionssensoren 1, 2 sind vorzugsweise zur gleichzeitigen Abtastung der ersten absolut codierten Codespur 34 und der ersten inkrementell Codespur 36 geeignet.

Die erste inkrementell codierte Codespur 36 ist vorzugsweise in Längsrichtung l parallel zu der ersten absolut codierten Codespur 34 und in Querrichtung q neben der ersten absolut codierten Codespur 34 angeordnet. Darüber hinaus ist die erste inkrementell codierte Codespur 36 vorzugsweise so ausgebildet, dass sie einen Inkrementalcode aufweist, der sich zyklisch wiederholt und dessen Perioden über die absolut codierte Codespur 34 absolut zugeordnet werden können. Vorzugsweise weist die inkrementell codierte Codespur 36 eine feinere Einteilung und damit eine höhere Auflösung als die absolut codierte Codespur 34 auf. Durch die gleichzeitige Abtastung der absolut codierten Codespur 34 und der inkrementell codierten Codespur 36 können somit hoch aufgelöste Sensorpositionen p1, p2 erfasst werden.

Die in Fig. 2 und Fig. 3 gezeigten Maßverkörperungen 30 weisen jeweils ein erstes Maßverkörperungssegment 38 und ein zweites Maßverkörperungssegment 40 auf. Die Maßverkörperungssegmente 38, 40 weisen jeweils ein erstes Segmentende 42 und ein zweites Segmentende 44 auf. Zwischen den aufeinanderfolgenden Segmentenden 44, 42 kann ein Versatz in Form einer Lücke 46 angeordnet sein. Um kenntlich zu machen, dass sich ein Maßverkörperungselement 38, 40 über eine größere Länge erstrecken kann, sind in den Figuren 2 und 3 die Maßverkörperungssegmente 38, 40 mit schräg angeordneten Unterbrechungen dargestellt.

Wie das Ausführungsbeispiel in Fig. 3 zeigt, kann ein Lesekopf 10 einen ersten ersten Positionssensor 1.1 und einen zweiten ersten Positionssensor 1.2 sowie einen ersten zweiten Positionssensor 2.1 und einen zweiten zweiten Positionssensor 2.2 aufweisen. Vorzugsweise sind die beiden ersten Positionssensoren 1.1, 1.2 und die beiden zweiten Positionssensoren 2.1, 2.2 im Wechsel an dem Lesekopf angeordnet, sodass in Leserichtung 12 auf den ersten ersten Positionssensor 1.1 der erste zweite Positionssensor 2.1, der zweite erste Positionssensor 1.2 und der zweite zweite Positionssensor 2.2 in dieser Reihenfolge folgen.

Wie in Fig. 2 dargestellt, kann von dem ersten Positionssensor 1 die Sensorposition p1 und von dem zweiten Positionssensor die Sensorposition p2 erfasst werden. Dementsprechend kann der erste erste Positionssensor 1.1 eine erste erste Sensorposition p1.1, der zweite erste Positionssensor 1.2 eine zweite erste Sensorposition p1.2, der erste zweite Positionssensor 2.1 eine erste zweite Sensorposition p2.1 und der zweite Positionssensor 2.2 eine zweite zweite Sensorposition p2.2 erfassen (und Fig. 3). Vorzugsweise wird aus den Sensorpositionen p1, p2 bzw. p1.1, p1.2, p2.1, p2.1 eine Lesekopfposition p bestimmt. Die Bestimmung der Lesekopfposition p kann beispielsweise durch Mittelung der Sensorpositionen p1, p2 bzw. p1.1, p1.2, p2.1, p2.2 erfolgen. Die Erfassung der Sensorpositionen p1 und p2 bzw. p1.1, p1.2, p2.1 und p2.2 erfolgt vorzugsweise gleichzeitig.

Zur Auswertung der Sensorpositionen p1, p2 bzw. p1.1, p1.2, p2.1, p2.2 kann das Encodersystem 20 eine nicht dargestellte Auswerteeinheit ausweisen, die dazu ausgebildet ist, aus dem jeweils gleichzeitig erfassten Sensorpositionen p1, p2 bzw. p1.1, p1.2, p2.1, p2.2 die Lesekopfposition p zu bestimmen. Die Lesekopfposition p kann dabei im Verhältnis zu den erfassten Sensorpositionen p1, p2 bzw. p1.1, p1.2, p2.1, p2.2 beliebig definiert werden. Vorzugsweise wird die Lesekopfposition p mittig zwischen den erfassten Sensorpositionen p1, p2 bzw. p1.1, p1.2, p2.1, p2.2 definiert.

Dadurch, dass die Positionssensoren 1, 2 bzw. 1.1, 1.2, 2.1, 2.2 in Leserichtung fest beabstandet zueinander angeordnet sind, kann, wie in Fig. 2 und Fig. 3 dargestellt, die Lesekopfposition p auch dann bestimmt werden, wenn sie mit der Lücke 46 zusammenfällt. Vorzugsweise wird vor Inbetriebnahme eine Einlernfahrt durchgeführt, in der die Lücken 46 erfasst und abgespeichert werden. Insbesondere dafür kann die Auswerteinheit Speichermittel zur Speicherung von Sensorpositionen p1, p2 bzw. p1.1, p1.2, p2.1, p2.2 und/oder Lesekopfpositionen p aufweisen.

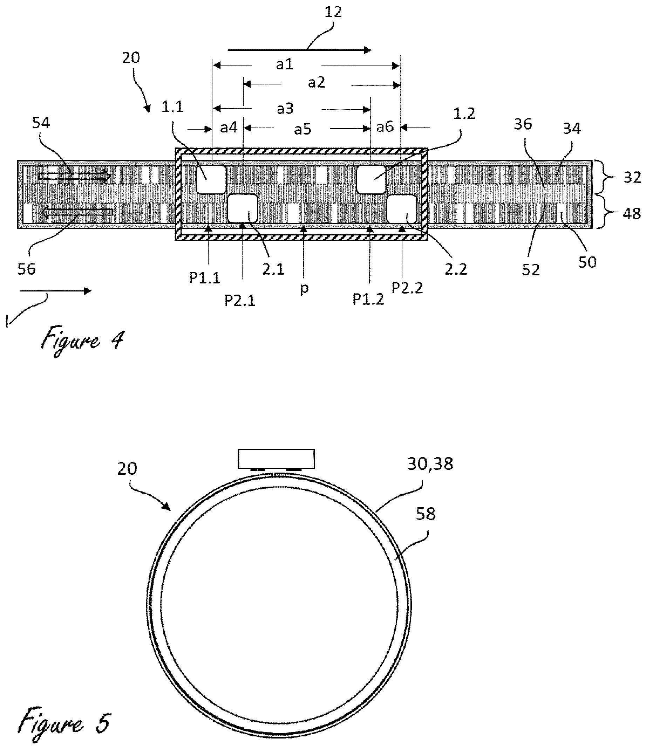

Dabei ist zu beachten, dass das in Figur 4 gezeigte Encodersystem 20 neben der ersten Codestrecke 32 mit der ersten absolut codierten Codespur 34 und der ersten inkrementell codierten Codespur 36 eine zweite Codestrecke 48 mit einer zweiten absolut codierten Codespur 50 und einer zweiten inkrementell codierten Codespur 52 aufweist. Vorzugsweise sind die erste Codestrecke 32 und die zweite Codestrecke 48 gegensinnig zueinander angeordnet. Besonders bevorzugt weist die erste Codestrecke 32 eine erste Zählrichtung 54 auf, die in Längsrichtung l aufsteigend ausgebildet ist, während die zweite Codestrecke 48 eine zweite Zählrichtung 56 aufweisen kann, die in Längsrichtung l absteigend ausgebildet sein kann.

Die Positionssensoren 1.1, 1.2, 2.1, 2.2 können in dem in Fig. 4 gezeigten Ausführungsbeispiel in Leserichtung 12 mit festen Abständen a1 bis a6 zueinander angeordnet sein. Vorzugsweise sind die ersten Positionssensoren 1.1, 1.2 derart angeordnet, dass sie die erste Codestrecke erfassen können und die zweiten Positionssensoren 2.1, 2.2 derart, dass sie die zweite Codestrecke 48 erfassen können.

Bei der Bestimmung der Lesekopfposition p werden vorzugsweise nicht plausible und/oder nicht aussagekräftige Sensorpositionen p1, p2 bzw. p1.1, p1.2, p2.1, p2.2 nicht verwendet. Wie eine Plausibilitätsprüfung erfolgen kann, wird nachfolgend anhand des in Fig. 4 dargestellten Ausführungsbeispiels erläutert. Im Vergleich zu den in Fig. 2 und Fig. 3 gezeigten Ausführungsbeispielen ist dabei insbesondere zu beachten, dass die erste Codestrecke 32 und die zweite Codestrecke 48 gegensinnig zueinander angeordnet sind.

Die Plausibilität aller gleichzeitig erfassten Sensorpositionen p1.1, p1.2, p2.1, p2.2 liegt vorzugsweise dann vor, wenn sämtliche der folgenden Bedingungen erfüllt sind:

$$p1.1 + p2.1 = a4,$$

$$p1.2 + p2.2 = a6,$$

$$p1.2 - p1.1 = a3,$$

$$p2.1 - p2.2 = a2,$$

$$p1.1 + p2.2 = a1,$$

$$p2.1 + p1.2 = a5.$$

Durch eine derartige Auswertung der gleichzeitig erfassten Sensorpositionen p1.1, p1.2, p2.1, p2.2 kann auch festgestellt werden, dass eine einzelne erfasste Sensorposition p1.1, p1.2, p2.1, p2.2 nicht plausibel ist.

Darüber hinaus können durch einen Vergleich der Abstände zwischen den gleichzeitig erfassten Sensorpositionen p1.1, p1.2, p2.1, p2.2 mit den festen Abständen a1 bis a6 systematische Änderungen, wie beispielsweise eine Längenänderung der Maßverkörperung insbesondere infolge einer Temperaturänderung erkannt und kompensiert werden. Insbesondere dafür können die Positionssensoren 1.1, 1.2, 2.1, 2.2 auf einem einstückigen Sensorträger 14 aus Quarzglas angeordnet sein. Dies gilt entsprechend für die in Fig. 2 und Fig. 3 gezeigten Ausführungsbeispiele.

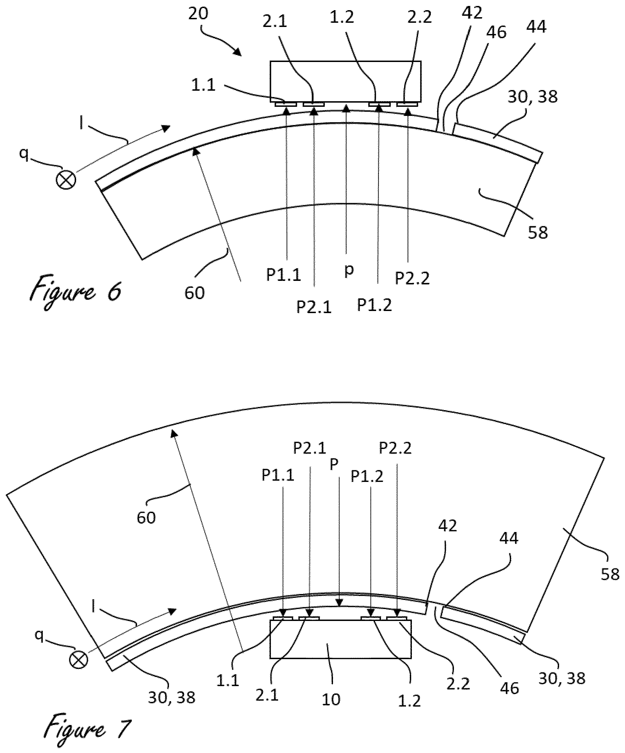

Fig. 5 und Fig. 6 zeigen ein weiteres Ausführungsbeispiel des Encodersystems 20. Dabei kann die Maßverkörperung 30 kreisförmig ausgebildet sein. Vorzugsweise ist die Maßverkörperung 30 auf einer Welle 58 mit einem Wellenradius 60 angeordnet. Die Maßverkörperung 30 kann dabei durch das erste Maßverkörperungssegment 38 mit dem ersten Segmentende 42 und dem zweiten Segmentende 44 gebildet sein. Vorzugsweise ist zwischen dem ersten Segmentende 42 und dem zweiten Segmentende 44 die Lücke 46 angeordnet. Dadurch kann die Montage der Maßverkörperung 30 auf der Welle 58 wesentlich vereinfacht werden. Den diesbezüglichen Ausführungen zu den in Fig. 2 und Fig. 3 gezeigten Ausführungsbeispielen entsprechend kann die Lesekopfposition p auch dann zuverlässig und eindeutig ermittelt werden, wenn der Lesekopf 10 über der Lücke 46 angeordnet ist.

Die Maßverkörperung 30 ist vorzugsweise derart angeordnet, dass die Querrichtung q und die Längsrichtung l senkrecht zum Wellenradius 60 angeordnet sind. Die Positionssensoren 1.1, 1.2, 2.1, 2.2 des Lesekopfs 10 sind vorzugsweise zumindest näherungsweise zum Wellenmittelpunkt und damit zum Kreismittelpunkt der kreisförmig ausgebildeten Maßverkörperung 30 hin ausgerichtet.

Die Maßverkörperung 30 ist dabei vorzugsweise auf dem Außenradius der Welle 58 angeordnet. Insbesondere, wenn die Welle 58 als Hohlwelle ausgebildet ist, kann alternativ dazu die Maßverkörperung 30, wie in Fig. 7 gezeigt, auf dem Innenradius der Welle 58 angeordnet sein. Im Unterschied zu dem in Fig. 5 u. 6 gezeigten Ausführungsbeispiel, kann der Lesekopf 10 innerhalb der Welle 58 angeordnet sein.

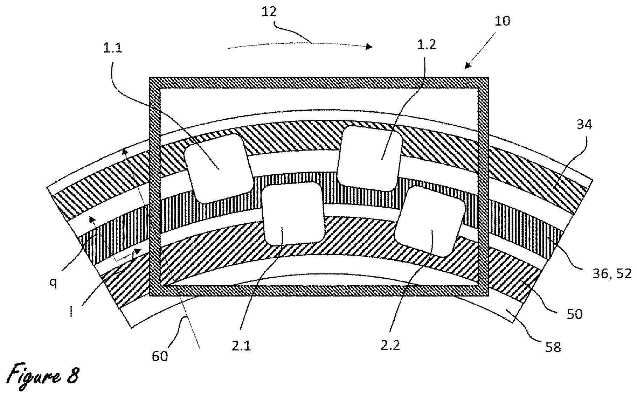

Ein weiteres Ausführungsbeispiel, bei dem die Maßverkörperung 30 kreisförmig ausgebildet sein kann, zeigt Fig. 8. Dabei ist die Maßverkörperung 30 vorzugsweise derart angeordnet, dass die Querrichtung q in Richtung des Wellenradius 60 und die Längsrichtung l senkrecht zum Wellenradius 60 angeordnet sind. Die Positionssensoren 1.1, 1.2, 2.1, 2.2 des Lesekopfs 10 sind vorzugsweise zumindest näherungsweise in Richtung einer nicht dargestellten, senkrecht zur Zeichnungsebene verlaufenden Wellenlängsachse ausgerichtet. Die Maßverkörperung 30 kann beispielsweise stirnseitig an einem Wellenende oder einem Wellenabsatz angeordnet sein.

In dem in Fig. 8 gezeigten Ausführungsbeispiel kann die zweite inkrementell codierte Codespur 52 durch die erste inkrementell codierte Codespur 36 gebildet sein, sodass die Maßverkörperung 30 zwei absolut codierte Codespuren 34, 50 und eine inkrementell codierte Codespur aufweist.

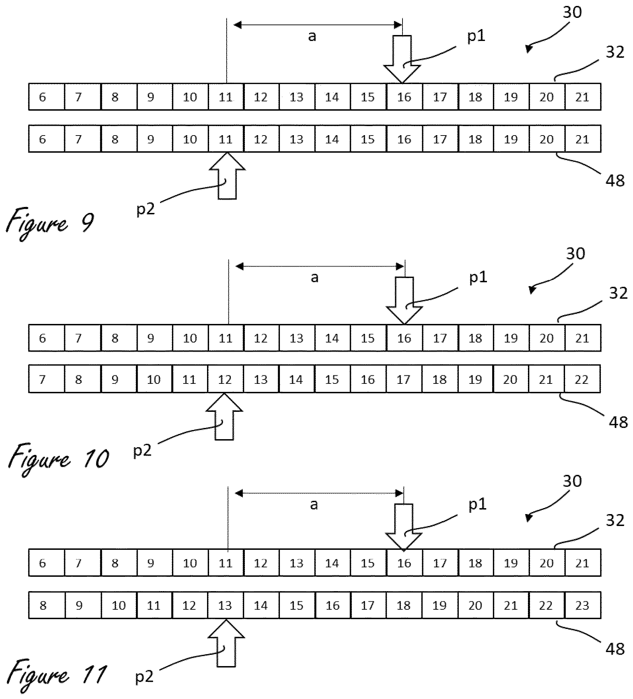

Die Fig. 9 bis 11 zeigen verschiedene Ausführungsbeispiele der Maßverkörperung 30, die vorzugsweise die erste Codestrecke 32 und die zweite Codestrecke 48 aufweisen. In jedem der in den Fig. 9 bis 11 gezeigten Ausführungsbeispiele können die erste Codestrecke 32 und die zweite Codestrecke 48 unterschiedlich zueinander angeordnet sein. Der Lesekopf 10 und die Maßverkörperungen 30 können dabei derart zueinander angeordnet sein, dass von dem Positionssensor 1 die erste Sensorposition p1 auf der ersten Codestrecke 32 erfassbar ist und gleichzeitig von dem zweiten Positionssensor 2 die zweite Sensorposition p2 auf der zweiten Codestrecke 48 erfassbar ist. Da der erste Positionssensor 1 und der zweite Positionssensor 2 mit dem festen Abstand a zueinander im Lesekopf 10 angeordnet sind (siehe auch Fig. 1), unterscheidet sich zwischen den in Fig. 9 bis Fig. 11 gezeigten Maßverkörperungen 30 die Differenz zwischen den jeweils gleichzeitig erfassten Sensorpositionen p1, p2. So kann die Differenz p1 - p2 bei dem in Fig. 9 gezeigten Ausführungsbeispiel 6, bei dem in Fig. 10 gezeigten Ausführungsbeispiel 5 und bei dem in Fig. 11 gezeigten Ausführungsbeispiel 4 sein.

Werden die in Fig. 9 bis Fig. 11 gezeigten Maßverkörperungen 30 in dem Encodersystem 20 hintereinander angeordnet, kann damit eine Messstrecke realisiert werden, die die dreifache Länge der Maßverkörperung 30 aufweist. Dadurch, dass sich die Differenz der gleichzeitig erfassten Sensorpositionen p1, p2 auf jeder Maßverkörperung 30 von den jeweils anderen unterscheidet, kann jede Position die der Lesekopf 10 auf der Messstrecke einnehmen kann, absolut und eindeutig bestimmt werden. In verschiedenen Ausführungsbeispielen der Maßverkörperung 30 werden dabei vorzugsweise gleiche erste Codestrecken 32 und/oder gleiche zweite Codestrecken 48 verwendet.

Dieser Vorgehensweise entsprechend, kann eine Messstrecke erzeugt werden, bei der die Anzahl der hintereinander angeordneten Maßverkörperungen 30 der Anzahl der eindeutigen Kombinationsmöglichkeiten der ersten Codestrecke 32 mit der zweiten Codestrecke 48 entspricht. Weist eine einen Meter lange Maßverkörperung 30 beispielsweise Codestrecken 32, 48 auf, die auf einen Mikrometer absolut codiert sind, können durch den Versatz der Codestrecken 32, 48 eine Million Maßverkörperungen 30 mit unterschiedlich zueinander angeordneten Codestrecken 32, 48 erhalten werden. Theoretisch kann damit eine Messstrecke mit einer Gesamtlänge von 1 Million Meter, also 1000 km erzeugt werden.

Um eindeutige Sensorpositionen p1, p1.1, p1.2, p2.1, p2.2 und damit eine eindeutige Lesekopfposition p erfassen zu können, wird in der Praxis die Versatzdifferenz der verschiedenen Maßverkörperungen 30 vorzugsweise im Millimeterbereich liegen. Im genannten Beispiel könnte damit eine Messstrecke von einem Kilometer realisiert werden.

Bezugszeichenliste

| | |
|---|---|
| 1 | erster Positionssensor |
| 1.1 | erster erster Positionssensor |
| 1.2 | zweiter erster Positionssensor |
| 2 | zweiter Positionssensor |
| 2.1 | erster zweiter Positionssensor |
| 2.2 | zweiter zweiter Positionssensor |
| 10 | Lesekopf |
| 12 | Leserichtung |
| 14 | Sensorträger |
| 16 | Lesekopfgehäuse |
| 20 | Encodersystem |
| 30 | Maßverkörperung |
| 32 | erste Codestrecke |
| 34 | erste absolut codierte Codespur |
| 36 | erste inkrementell codierte Codespur |
| 38 | erstes Maßverkörperungssegment |
| 40 | zweites Maßverkörperungssegment |
| 42 | erstes Segmentende |
| 44 | zweites Segmentende |
| 46 | Lücke |
| 48 | zweite Codestrecke |
| 50 | zweite absolut codierte Codespur |
| 52 | zweite inkrementell codierte Codespur |
| 54 | aufsteigende Zählrichtung |
| 56 | absteigende Zählrichtung |
| 58 | Welle |
| 60 | Wellenradius |
| a | fester Abstand |
| a1 | erster fester Abstand |
| a2 | zweiter fester Abstand |
| a3 | dritter fester Abstand |
| a4 | vierter fester Abstand |
| a5 | fünfter fester Abstand |
| a6 | sechster fester Abstand |
| l | Längsrichtung |
| p | Lesekopfposition |
| p1 | erste Sensorposition |
| p1.1 | erste erste Sensorposition |
| p1.2 | zweite erste Sensorposition |
| p2 | zweite Sensorposition |
| p2.1 | erste zweite Sensorposition |
| p2.2 | zweite zweite Sensorposition |
| q | Querrichtung |

**Patentansprüche**

1. Encodersystem mit folgenden Merkmalen:

   • einem Lesekopf (10) mit mindestens einem ersten Positionssensor (1, 1.1, 1.2) und mindestens einem zweiten Positionssensor (2, 2.1, 2.2), wobei die Positionssensoren (1, 1.1, 1.2, 2, 2.1, 2.2) in einer Leserichtung (12) mit einem festen Abstand (a, a1, a2, a3, a4, a6) zu-

einander angeordnet sind.

• einer Maßverkörperung (30) mit einer Längsrichtung (l) und einer Querrichtung (q), wobei die Maßverkörperung (30) in Längsrichtung (l) eine erste Codestrecke (32) mit einer ersten absolut codierten Codespur (34) aufweist, und wobei die erste Codestrecke (32) eine erste inkrementell codierte Codespur (36) aufweist,

• wobei der Lesekopf (10) und die Maßverkörperung (30) derart zueinander angeordnet sind, dass die Leserichtung (12) der Längsrichtung (l) entspricht, dass der Lesekopf (10) und die Maßverkörperung (30) in Leserichtung (12) relativ zueinander bewegbar sind, und dass von dem mindestens einen ersten Positionssensor (1, 1.1, 1.2) jeweils eine erste Sensorposition (p1, p1.1, p1.2) auf der Maßverkörperung (30) erfassbar ist und gleichzeitig von dem mindestens einen zweiten Positionssensor (2, 2.1, 2.2) jeweils eine zweite Sensorposition (p2, p2.1, p2.2) auf der Maßverkörperung (30) erfassbar ist, wobei die Maßverkörperung (30) eine zweite Codestrecke (48) mit einer zweiten absolut codierten Codespur (50) und einer zweiten inkrementell codierten Codespur (52) aufweist, wobei die Codestrecken (32, 48) der Maßverkörperung parallel zueinander angeordnet sind, und wobei der Lesekopf (10) und die Maßverkörperung (30) derart zueinander angeordnet sind, dass von dem mindestens einen ersten Positionssensor (1, 1.1, 1.2) die jeweilige erste Sensorposition (p1, p1.1, p1.2) auf der ersten Codestrecke (32) erfassbar ist und gleichzeitig von dem mindestens einen zweiten Positionssensor (2, 2.1, 2.2) die jeweilige zweite Sensorposition (p2, p2.1, p2.2) auf der zweiten Codestrecke (48) erfassbar ist.

2. Encodersystem nach Anspruch 1,
**dadurch gekennzeichnet, dass**
der Lesekopf (10) zwei erste Positionssensoren (1.1, 1.2) und zwei zweite Positionssensoren (2.1, 2.2) aufweist.

3. Encodersystem nach einem der vorhergehenden Ansprüche,
**dadurch gekennzeichnet, dass**
die Positionssensoren (1, 1.1, 1.2, 2, 2.1, 2.2) als optische Positionssensoren (1, 1.1, 1.2, 2, 2.1, 2.2) ausgebildet sind.

4. Encodersystem nach einem der vorhergehenden Ansprüche,
**dadurch gekennzeichnet, dass** jeder der Positionssensoren (1, 1.1, 1.2, 2, 2.1, 2.2) zur gleichzeitigen Abtastung einer absolut codierten Codespur (34, 50) und einer inkrementell codierten Codespur (36, 52) geeignet ist.

5. Encodersystem nach einem der vorhergehenden Ansprüche,
**dadurch gekennzeichnet, dass**
die Positionssensoren (1, 1.1, 1.2, 2, 2.1, 2.2) auf einem einstückigen Sensorträger (14) angeordnet sind, dessen Wärmeausdehnungskoeffizient betragsmäßig kleiner oder gleich 2 ppm/K ist.

6. Encodersystem nach einem der vorhergehenden Ansprüche,
**dadurch gekennzeichnet, dass**
die erste Codestrecke (32) und die zweite Codestrecke (48) gegensinnig zueinander angeordnet sind.

7. Encodersystem nach einem der vorhergehenden Ansprüche,
**dadurch gekennzeichnet, dass**
die Maßverkörperung (30) mindestens ein Maßverkörperungssegment (38, 40) mit einem ersten Segmentende (42) und einem zweiten Segmentende (44) aufweist.

8. Encodersystem nach einem der vorhergehenden Ansprüche,
**dadurch gekennzeichnet, dass**
die Maßverkörperung (30) linear und/oder bogenförmig und/oder kreisförmig ausgebildet ist.

9. Encodersystem nach einem der vorhergehenden Ansprüche,
**dadurch gekennzeichnet, dass**
das Encodersystem (20) eine Auswerteeinheit zur Auswertung der Sensorpositionen (p1, p1.1, p1.2, p2, p2.1, p2.2) aufweist, wobei die Auswerteeinheit dazu ausgebildet ist, aus den jeweils gleichzeitig erfassten Sensorpositionen (p1, p1.1, p1.2, p2, p2.1, p2.2) eine Lesekopfposition (p) zu bestimmen.

10. Encodersystem nach Anspruch 9,
**dadurch gekennzeichnet, dass**
die Auswerteeinheit dazu ausgebildet ist, die Sensorpositionen (p1, p1.1, p1.2, p2, p2.1, p2.2) auf Plausibilität und/oder Aussagekraft zu prüfen und nicht plausible und/oder nicht aussagekräftige Sensorpositionen (p1, p1.1, p1.2, p2, p2.1, p2.2) nicht zur Bestimmung der Lesekopfposition (p) zu verwenden.

11. Encodersystem nach einem der Ansprüche 9 bis 10,
**dadurch gekennzeichnet, dass**
die Auswerteeinheit Speichermittel zur Speicherung von Sensorpositionen (p1, p1.1, p1.2, p2, p2.1, p2.2) und/oder Lesekopfpositionen (p) aufweist.

12. Encodersystem nach einem der vorhergehenden Ansprüche,
**dadurch gekennzeichnet, dass**

das Encodersystem (20) mehrere Maßverkörperungen (30) aufweist, wobei in jeder Maßverkörperung (30) die erste Codestrecke (32) und die zweite Codestrecke (48) unterschiedlich zueinander angeordnet sind.

13. Verfahren zur Bestimmung der Lesekopfposition (p) in einem Encodersystem (20) nach einem der Ansprüche 1 bis 12 mit folgenden Schritten:

• gleichzeitige Erfassung der jeweiligen ersten Sensorposition (p1, p1.1, p1.2) des mindestens einen ersten Positionssensors (1, 1.1, 1.2) und der jeweiligen zweiten Sensorposition (p2, p2.1, p2.2) des mindestens einen zweiten Positionssensors (2, 2.1, 2.2),
• Überprüfung der Plausibilität und/oder Aussagekraft jeder Sensorposition (p1, p1.1, p1.2, p2, p2.1, p2.2) durch Vergleich mit den jeweils anderen gleichzeitig ermittelten Sensorpositionen (p1, p1.1, p1.2, p2, p2.1, p2.2),
• Bestimmung der Lesekopfposition (p) auf Basis der plausiblen und/oder aussagekräftigen Sensorpositionen (p1, p1.1, p1.2, p2, p2.1, p2.2).

**Claims**

1. Encoder system having the following features:

• a reading head (10) having at least one first position sensor (1, 1.1, 1.2) and at least one second position sensor (2, 2.1, 2.2), wherein the position sensors (1, 1.1, 1.2, 2, 2.1, 2.2) are arranged in a reading direction (12) at a fixed spacing (a, a1, a2, a3, a4, a6, a6) from one another.
• a material measure (30) having a longitudinal direction (l) and a transverse direction (q), wherein the material measure (30) has a first code stretch (32) having a first absolutely coded code track (34), and wherein the first code stretch (32) has a first incrementally coded code track (36),
• wherein the reading head (10) and the material measure (30) are arranged relative to one another in such a way that the reading direction (12) corresponds to the longitudinal direction (1), that the reading head (10) and the material measure (30) are movable relative to one another in the reading direction (12), and that in each case one sensor position (p1, p1.1, p1.2) on the material measure (30) can be acquired by the at least one first position sensor (1, 1.1, 1.2) and at the same time in each case at least one second sensor position (p2, p2.1, p2.2) can be acquired by the at least one second position sensor (2, 2.1, 2.2),
wherein
the material measure (30) has a second code stretch (48) having a second absolutely coded code track (50) and a second incrementally coded code track (52), wherein the code stretches (32, 48) of the material measure are arranged in parallel with one another, and wherein the reading head (10) and the material measure (30) are arranged relative to one another in such a way that the respective first sensor position (p1, p1.1, p1.2) on the first code stretch (32) can be acquired by the at least one first position sensor (1, 1.1, 1.2) and at the same time the respective second sensor position (p2, p2.1, p2.2) on the second code stretch (48) can be acquired by the at least one second position sensor (2, 2.1, 2.2).

2. Encoder system according to claim 1, **characterised in that** the reading head (10) comprises two first position sensors (1.1, 1.2) and two second position sensors (2.1, 2.2).

3. Encoder system according to either of the preceding claims, **characterised in that** the position sensors (1, 1.1, 1.2, 2, 2.1, 2.2) are configured as optical position sensors (1, 1.1, 1.2, 2, 2.1, 2.2).

4. Encoder system according to any of the preceding claims, **characterised in that** each of the position sensors (1, 1.1, 1.2, 2, 2.1, 2.2) is suitable for simultaneously scanning an absolutely coded code track (34, 50) and an incrementally coded code track (36, 52).

5. Encoder system according to any of the preceding claims, **characterised in that** the position sensors (1, 1.1, 1.2, 2, 2.1, 2.2) are arranged on an integral sensor carrier (14), the thermal expansion coefficient of which is, in terms of magnitude, smaller than or equal to 2 ppm/K.

6. Encoder system according to any of the preceding claims, **characterised in that** the first code stretch (32) and the second code stretch (48) are arranged opposingly to one another.

7. Encoder system according to any of the preceding claims, **characterised in that** the material measure (30) has at least one material measure segment (38, 40) having a first segment end (42) and a second segment end (44).

8. Encoder system according to any of the preceding claims,
**characterised in that** the material measure (30) is configured to be linear and/or curved and/or circular.

9. Encoder system according to any of the preceding claims,
**characterised in that** the encoder system (20) comprises an evaluation unit for evaluating the sensor positions (p1, p1.1, p1.2, p2, p2.1, p2.2), wherein the evaluation unit is configured for determining a reading head position (p) from the sensor positions (p1, p1.1, p1.2, p2, p2.1, p2.2) acquired simultaneously in each case.

10. Encoder system according to claim 9,
**characterised in that** the evaluation unit is configured for checking the sensor positions (p1, p1.1, p1.2, p2, p2.1, p2.2) for plausibility and/or meaningfulness, and for not using implausible and/or non-meaningful sensor positions (p1, p1.1, p1.2, p2, p2.1, p2.2) for determining the reading head position (p).

11. Encoder system according to either of claims 9 to 10,
**characterised in that** the evaluation unit comprises memory means for storing sensor positions (p1, p1.1, p1.2, p2, p2.1, p2.2) and/or reading head positions (p).

12. Encoder system according to any of the preceding claims,
**characterised in that** the encoder system (20) comprises a plurality of material measures (30), wherein the first code stretch (32) and the second code stretch (48) are arranged differently relative to one another, in each material measure (30).

13. Method for determining the reading head position (p) in an encoder system (20) according to any of claims 1 to 12, having the following steps:

   • simultaneously acquiring the respective first sensor position (p1, p1.1, p1.2) of the at least one first position sensor (1, 1.1, 1.2) and the respective second sensor position (p2, p2.1, p2.2) of the at least one second position sensor (2, 2.1, 2.2),
   • checking the plausibility and/or meaningfulness of each sensor position (p1, p1.1, p1.2, p2, p2.1, p2.2) by comparison with the other sensor positions (p1, p1.1, p1.2, p2, p2.1, p2.2) acquired simultaneously in each case,
   • determining the reading head position (p) on the basis of the plausible and/or meaningful sensor positions (p1, p1.1, p1.2, p2, p2.1, p2.2).

## Revendications

1. Système de codage comprenant les caractéristiques suivantes :

   • une tête (10) de lecture ayant au moins un premier capteur (1, 1.1, 1.2) de position et au moins un deuxième capteur (2, 2.1, 2.2) de position, dans lequel les capteurs (1, 1.1, 1.2, 2, 2.1, 2.2) de position sont disposés dans un dispositif (12) de lecture à une distance (a, a1, a2, a3, a4, a6, a6) fixe les uns par rapport aux autres,
   • une mesure (30) matérialisée ayant une direction (1) longitudinale et une direction (q) transversale, dans lequel la mesure (30) matérialisée a dans la direction (1) longitudinale un premier segment (32) de code ayant une première trace (34) de code codée de manière absolue, et dans lequel le premier segment (32) de code a une première trace (36) de code codée de manière incrémentielle,
   • dans lequel la tête (10) de lecture et la mesure (30) matérialisée sont disposées l'une par rapport à l'autre de manière à ce que la direction (12) de lecture corresponde à la direction (1) longitudinale, en ce que la tête (10) de lecture et la mesure (30) matérialisée sont mobiles l'une par rapport à l'autre dans la direction (12) de lecture, et en ce que respectivement une première position (p1, p1.1, p1.2) de capteur sur la mesure (30) matérialisée peut être détectée par le au moins un premier capteur (1, 1.1, 1.2) de position et en même temps respectivement une deuxième position (p2, p2.1, p2.2) de capteur sur la mesure (30) matérialisée peut être détectée par le au moins un deuxième capteur (2, 2.1, 2.2) de position,
   dans lequel
   la mesure (30) matérialisée a un deuxième segment (48) de code ayant une deuxième trace (50) de code codée de manière absolue et une deuxième trace (52) de code codée de manière incrémentielle, dans lequel les segments (32, 48) de code de la mesure matérialisée sont disposés en étant parallèles entre eux et dans lequel la tête (10) de lecture et la mesure (30) matérialisée sont disposées l'un par rapport à l'autre de manière à ce que la première position (p1, p1.1, p1.2) respective de capteur sur le premier segment (32) de code puisse être détectée par le au moins un premier capteur (1, 1.1, 1.2) de position et de manière à ce que la deuxième position (p2, p2.1, p2.2) respective de capteur sur le deuxième segment (48) de code puisse être détectée en même temps par le au moins un deuxième capteur (2, 2.1, 2.2) de position.

**2.** Système de codage suivant la revendication 1, **caractérisé en ce que** la tête (10) de lecture a deux premiers capteurs (1.1, 1.2) de position et deux capteurs (2.1, 2.2) de position.

**3.** Système de codage suivant l'une des revendications précédentes, **caractérisé en ce que** les capteurs (1, 1.1, 1.2, 2, 2.1, 2.2) de position sont constitués sous la forme de capteurs (1, 1.1, 1.2, 2, 2.1, 2.2) optiques de position.

**4.** Système de codage suivant l'une des revendications précédentes, **caractérisé en ce que** chacun des capteurs (1, 1.1, 1.2, 2, 2.1, 2.2) de position est propre à balayer simultanément une trace (34, 50) de code codée de manière absolue et une trace (36, 52) de code codée de manière incrémentielle.

**5.** Système de codage suivant l'une des revendications précédentes, **caractérisé en ce que** les capteurs (1, 1.1, 1.2, 2, 2.1, 2.2) de position sont disposés sur un support (14) de capteur d'une seule pièce, dont le coefficient de dilatation thermique est en valeur absolue inférieur ou égal à 2 ppm/K.

**6.** Système de codage suivant l'une des revendications précédentes, **caractérisé en ce que** le premier segment (32) de code et le deuxième segment de (48) de code sont disposés en sens inverse l'un de l'autre.

**7.** Système de codage suivant l'une des revendications précédentes, **caractérisé en ce que** la mesure (30) matérialisée a au moins un segment (38, 40) de mesure matérialisée ayant un premier bout (42) de segment et un deuxième bout (44) de segment.

**8.** Système de codage suivant l'une des revendications précédentes, **caractérisé en ce que** la mesure (30) matérialisée est de constitution linéaire et/ou arquée et/ou circulaire.

**9.** Système de codage suivant l'une des revendications précédentes, **caractérisé en ce que** le système (20) de codage a une unité d'évaluation pour l'évaluation des positions (p1, p1.1, p1.2, p2, p2.1, p2.2) de capteur, dans lequel l'unité d'évaluation est constituée pour, à partir des positions (p1, p1.1, p1.2, p2, p2.1, p2.2) de capteur détectées respectivement en même temps, déterminer une position (p) de la tête de lecture.

**10.** Système de codage suivant la revendication 9, **caractérisé en ce que** l'unité d'évaluation est constituée pour contrôler la vraisemblance et/ou la confiance que l'on peut accorder aux positions (p1, p1.1, p1.2, p2, p2.1, p2.2) de capteur et pour ne pas utiliser, pour la détermination de la position (p) de la tête de lecture, des positions (p1, p1.1, p1.2, p2, p2.1, p2.2) de capteur invraisemblables et/ou auxquelles on ne peut pas faire confiance.

**11.** Système de codage suivant l'une des revendications 9 à 10, **caractérisé en ce que** l'unité d'évaluation a un moyen de mémoire pour la mise en mémoire de positions (p1, p1.1, p1.2, p2, p2.1, p2.2) de capteur et/ou de positions (p) de la tête de lecture.

**12.** Système de codage suivant l'une des revendications précédentes, **caractérisé en ce que** le système (20) de codage a plusieurs mesures (30) matérialisées, dans lequel dans chaque mesure (30) matérialisée le premier segment (32) de codage et le deuxième segment (48) de codage sont disposés d'une manière différente l'un de l'autre.

**13.** Procédé de détermination de la position (p) d'une tête de lecture dans un système (20) de codage suivant l'une des revendications 1 à 12, comprenant les stades suivants :

• détection simultanée de la première position (p1, p1.1, p1.2) de capteur respective du au moins un premier capteur (1, 1.1, 1.2) de position et de la deuxième position (p2, p2.1, p2.2) respective de capteur du au moins un deuxième capteur (2, 2.1, 2.2) de position,
• contrôle de la vraisemblance de chaque position (p1, p1.1, p1.2, p2, p2.1, p2.2) de capteur et/ou de la confiance que l'on peut lui accorder par comparaison avec les autres positions (p1, p1.1, p1.2, p2, p2.1, p2.2) de capteur respectifs déterminés en même temps,
• détermination de la position (p) de la tête de lecture sur la base des positions (p1, p1.1, p1.2, p2, p2.1, p2.2) de capteur vraisemblables et/ou auxquelles on peut faire confiance.

Figure 1

Figure 2

Figure 3

Figure 4

Figure 5

Figure 6

Figure 7

Figure 8

30

p1

32

| 6 | 7 | 8 | 9 | 10 | 11 | 12 | 13 | 14 | 15 | 16 | 17 | 18 | 19 | 20 | 21 |

a

| 6 | 7 | 8 | 9 | 10 | 11 | 12 | 13 | 14 | 15 | 16 | 17 | 18 | 19 | 20 | 21 |

48

p2

Figure 9

30

p1

32

| 6 | 7 | 8 | 9 | 10 | 11 | 12 | 13 | 14 | 15 | 16 | 17 | 18 | 19 | 20 | 21 |

a

| 7 | 8 | 9 | 10 | 11 | 12 | 13 | 14 | 15 | 16 | 17 | 18 | 19 | 20 | 21 | 22 |

48

p2

Figure 10

30

p1

32

| 6 | 7 | 8 | 9 | 10 | 11 | 12 | 13 | 14 | 15 | 16 | 17 | 18 | 19 | 20 | 21 |

a

| 8 | 9 | 10 | 11 | 12 | 13 | 14 | 15 | 16 | 17 | 18 | 19 | 20 | 21 | 22 | 23 |

48

p2

Figure 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2288876 B1
- WO 2019119162 A1
- EP 1770374 A2

- WO 2019192196 A1
- DE 102013220749 A1
- WO 2014030177 A1